# EUROPEAN PATENT APPLICATION

(11) **EP 1 365 182 A1**
(43) Date of publication of application: **26.11.2003**
(21) Application number: 02011175.3
(22) Date of filing: 21.05.2002
(51) Int. Cl.: F16K 7/10, A63B 41/02, A63H 27/10

(54) **An inflatable, flexible device**

(71) Applicant: Saxenfelt, Keld, 4700 Naestved (DK)
(72) Inventor: Saxenfelt, Keld, 4700 Naestved (DK)
(74) Representative: Nielsen, Henrik Sten

(57) **Abstract**

An inflatable, flexible device (10) for use an expandable device comprises an inlet (14) part of a substantially tubular configuration, an expendable bag part (12) integrally connected to the inlet part (14) and made from a highly flexible and highly elastic material such as natural rubber, synthetic rubber, plastics, polymer or elastomer materials or combinations thereof, optionally reinforced by fibre or mesh included in the material. The expandable bag is changeable from an unexpanded state to an expanded state by inflating the bag through the introduction of an inflation gas into the interior through the inlet part (14). The expandable bag defines in the expandable state a specific, regular, geometric confuguration such as sphere, a rotational symmetrical body having a generator of a curved, convex or concave shape. The expandable bag includes in its unexpanded state a plurality of inwardly bent folds (16) extending parallel with the inlet part (14) and extending from positions juxtaposed the inlet part (14) along a major part of the outer surface of the expandable bag part (12). The inwardly bent folds (16) reduce the overall diameter of the expandable device in the unexpanded state by at least 30%, preferably 40%, further preferably 50%, further preferably 60% or 70%, such as 30%-35%, 35%-40%, 40%-45%, 45%-50%, 50%-55%, 55%-60%, 60%-65%, 65%-70%, as compared to the geometrical configuration defined by the expandable bag in the non-expanded state and not including the plurality of inwardly bent folds (16).

## Description

In numerous applications, a rubber body such as a hose or a tube is used for filling out a cavity within a body or used as a closure body in a valve construction. An example of this particular field is described in published international patent application WO 01/11283 corresponding to European patent application EP 1198683. In this published international patent application a technique of closing off a pipe is described, according to which technique a bore is produced in the wall of the pipe as a branching off pipe is fixated to the pipe and the bore is produced in a drilling operation through the branching off pipe in which a bore valve is included. After the production of the through going bore of the major pipe, the tool for the production of the bore is removed, and an expandable rubber hose is introduced through the bore.

The implementation of this technique, however, has proven that a conventional rubber hose is not able to be introduced through the bore for the reason that the conventional rubber bore being a homogeneous spherical rubber bore having an inlet tube cannot be collapsed for allowing the material of the spherical rubber bore to be introduced through the bore produced in the wall of the pipe. In this application, this spherical rubber hose must fulfil two contradictory conditions, viz. on the one hand a requirement of sufficient rubber bore thickness, in particular in case the rubber wall is made from a fibre or mesh reinforced rubber material, and on the other hand the requirement of allowing the spherical rubber hose to be introduced through the bore in a non-expanded state.

In numerous other applications of inflatable tubes or hoses, similar contradictory requirements exist, necessitating the production of an expandable hose or tube allowing the fulfilment of these two contradictory requirements.

Examples of inflatable, flexible devices are e.g. described in EP patent application 0 583 819 A1, US patent 3,714,951, US patent 4,565,222, and US patent 5,901,752.

An object of the present invention is to provide an inflatable, flexible device allowing the device to be expanded from an unexpanded state in which the outer dimension of the hose or tube is radically reduced such as reduced by 30%-70% compared to the outer dimension of the inflatable, flexible device in expanded state. In this context, it is to be realised that the present invention is primarily related to spherical closure hoses, however, differently configurated bodies such as ellipsoid bodies, elongated, cylindrical tubes having rounded end parts or other regular geometrical configuration is perceivable, and in this context the configuration as to the maximum outer dimension of the hose or tube relates to the characteristic outer dimension of the expanded hose or tube in its intentional application.

A feature of the present invention relates to the fact that the inflatable, flexible device which may constitute a fibre or mesh reinforced inflatable, flexible device may be produced in a collapsed state in which the requirements as to special requirements of production of the device according to the present invention is reduced by at least a factor 2 as compared to conventional, inflatable and flexible device having a smooth outer surface.

A feature of the present invention relates to the fact that the inflatable, flexible device according to the present invention may based on its intentional regular outer configuration be configurated in a specific unexpanded state reducing the overall outer dimension of the device in its uninflated state as compared to a conventional expandable device.

The above object, the above advantages and the above features together with numerous other objects, advantages and features would be evident from the below detailed description of the presently preferred embodiments of the inflatable, flexible device according to the present invention are obtained by an inflatable, flexible device for use as an expandable device, comprising:
an inlet part of a substantially tubular configuration,
an expandable bag part integrally connected to the inlet part and made form a highly flexible and highly elastic material such as natural rubber, synthetic rubber, plastics, polymer or elastomer materials or combinations thereof, optionally reinforced by fibre or mesh included in the material, the expandable bag being changeable from an unexpanded state to an expanded state by inflating the bag through the introduction of an inflation gas into the interior through the inlet part, the expandable bag defining in the expandable state a specific, regular, geometric configuration such as a sphere, a rotational symmetrical body having a generator of a curved, convex or concave shape, the expandable bag including in its unexpanded state a plurality of inwardly bent folds extending parallel with the inlet part and extending from positions juxtaposed the inlet part along a major part of the outer surface of the expandable bag part, the inwardly bent folds reducing the overall diameter of the expandable device in the unexpanded state by at least 30%, preferably 40%, further preferably 50%, further preferably 60% or 70%, such as 30%-35%, 35%-40%, 40%-45%, 45%-50%, 50%-55%, 55%-60%, 60%-65%, 65%-70%, as compared to the geometrical configuration defined by the expandable bag in the non-expanded state and not including the plurality of inwardly bent folds.

According the teaching characteristics of the present invention, the inflatable, flexible device according to the present invention is in its unexpanded state collapsed into a dimensionally reduced configuration through the provision of the inwardly bent folds. The inwardly bent folds surprisingly provide a smooth outer surface of the expandable bag part in its expanded state in spite of the irregular configuration of the expandable bag part in its unexpanded state.

The number of folds providing the dimensional reduction of the expandable bag part in its unexpanded state as compared to its expanded state may vary from application to application. According to the presently preferred embodiments of the inflatable, flexible device according to the present invention, the inflatable, flexible device according to claim 1, said plurality of inwardly bent folds comprising 4-24 folds such as 6-18 folds, preferably 12 folds, or 4-6, 6-8, 8-10, 10-12, 12-14, 14-16, 16-18, 18-20, 20-22, 22-24 folds.

For obtaining the feature of allowing the expandable bag part to collapse in its unexpanded state, the inwardly bent folds may according to one embodiment of the inflatable, flexible device according to the present invention extend to the aphex of the expandable bag part opposite to its inlet part. However, according to the presently preferred embodiment of the inflatable, flexible device according to the present invention an unfolded part is provided in the expandable bag part opposite to its integral connection to the inlet part for providing a generator for the unfolding of the inwardly bent folds into the smooth intentional configuration of the expandable bag part in its expanded state.

Dependent on the intentional application of the device according to the present invention, the inlet part may vary in length and width. The width of the inlet part needs to fulfil the requirements of providing adequate inlet capability for providing the expansion of the expandable bag part through the introduction of the inflation gas, which gas may be constituted by pressurised air or an inert gas or a substantial inert gas such as e.g. nitrogen. Provided a connection from the expandable bag part to the inflation gas source is needed, the inlet part may define a length substantially larger than the characteristic outer dimension of the expandable bag part or define a length substantially identical to the characteristic outer dimension of the expandable bag part or the length substantially smaller than the characteristic outer dimension of the expandable bag part.

The inflatable, flexible device is as stated above, made from a highly flexible and highly elastic material, preferably natural rubber. Consequently, the inlet part and the expandable bag part of the inflatable, flexible device according to the present invention are therefore according to the presently preferred embodiment of the device according to the present invention made from one and the same material, viz. natural rubber and further made in one and the same production process.

The present invention is now to be further described with reference to the drawings, in which
Fig. 1 is an overall perspective and schematic view of a first and presently preferred embodiment of a pre-collapsed, inflatable and expandable device according to the present invention for use as a valve body in a closure valve of a pipe,
Fig. 2 is a cross-sectional view of the first and presently preferred embodiment of the pre-collapsed, inflatable and expandable device according to the present invention also shown in Fig. 1,
Figs 3a and 3b are perspective, schematic and partly cutaway views of the intentional application of the first and presently preferred embodiment of the pre-collapsed, inflatable and expandable device according to the present invention shown in Fig. 1 and 2 illustrating two steps of introducing in the pre-collapsed state the device according to the present invention into the pipe as shown in Fig. 3a and the step of providing the closing of the pipe by inflating and expanding the device as shown in Fig. 3, and
Figs. 4a and 4b are perspective, schematic and partly cutaway views of a different application of the pre-collapsed, inflatable and expandable device according to the present invention as a tube of a ball such as a football.

The present invention relates in general to a technique of providing an inflatable and expandable rubber hose or tube having in its inflated and expanded state a general spherical configuration and including an inlet tube for allowing the introduction of an expansion gas such as pressurised atmospheric air or pressurised nitrogen constituting a substantial inert gas into the interior of the inflatable and expandable device which device is of a slim configuration as the device is produced in a pre-collapsed state and maintained in the pre-collapsed state until the inflation of the device is initiated allowing the inflatable and expandable device according to the present invention to be readily introduced into a narrow aperture, bore or hole of an apparatus or system etc. into which the device is to be introduced prior to the inflation and expansion of the device. A particular application of the device according to the present invention relates to the use according to the blocking technique published in international patent application WO 01/11283 corresponding to European patent application EP 1198683.

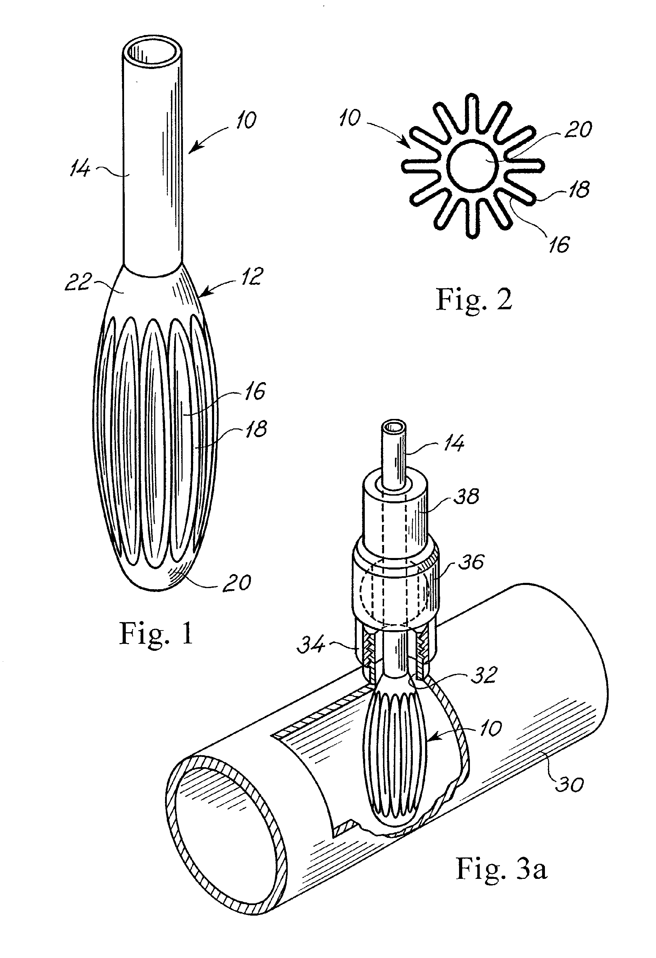

In Fig. 1, a first and presently preferred embodiment of the pre-collapsed, inflatable and expandable device according to the present invention is shown designated the reference numeral 10 in its entirety. The device 10 basically comprises two integrally produced parts, a pre-collapsed spherical part 12 and a tubelike inlet part 14. The inlet part 14 is of a basically circular cylindrical configuration whereas the pre-collapsed spherical part 12 defines a configuration of a sphere the outer surface of which is collapsed or folded into a total of twelve inwardly bent folds folding the pre-collapsed spherical part into a slim configuration providing an overall transversal diameter of less than 50% of the diameter of the un-collapsed sphere, preferably less than 40%, further preferably less than 30% of the diameter of the un-collapsed sphere. One of the inwardly bent folds is designated the reference numeral 16 and between any two adjacent inwardly bent folds and outwardly extending ridge is defined one of which is defined the reference numeral 18. Opposite to the inlet part 14, the pre-collapsed spherical part 12 has a smooth and un-collapsed end section 20 and between the inlet part 14 and the inwardly bent folds 18 a smooth basically conical part 22 is provided.

In Fig. 2, a transversal sectional view of the device 10 is shown disclosing the inwardly bent folds 16, the ridges 18 and the inter surface of the smooth end part 20. As is evident from Fig. 2, the inwardly bent folds 16 extend to a position closely adjacent the inner boundary of the smooth end part 20, and each of the folds 16 defines an inward depth of more than 50% of the radius defined between any two opposed ridges 18. The depths defined by each of the inwardly bent folds 18 constitute in the embodiment shown in Fig. 2 approximately 55% of the radius defined by any two opposite ridges 18 or more than 27% of the overall diameter or width of the body defined by the pre-collapsed spherical part 12.

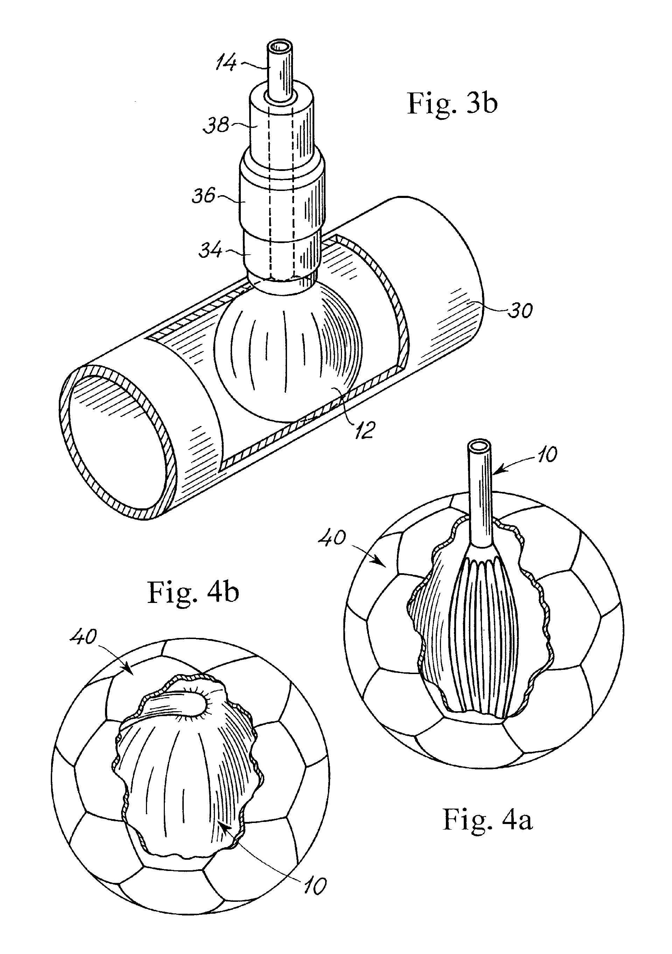

In Figs. 3a and 3b, the primarily intentional application of the pre-collapsed, inflatable and expandable device 10 according to the present invention is shown which application relates to the use of the device as an inflatable blocking device which is introduced into a pipe 30. In this context, reference is made to the above-mentioned published international patent application corresponding to the above-mentioned European patent application. In Fig. 3a, a pipe 30 is shown in which a small diameter aperture 32 is drilled as a pipe branch 34 is fixated to the pipe 30 and further connected to a shut-off bore valve 36 on the top of which an insertion cup 38 is mounted. As the shut-off valve 36 is opened as illustrated in Fig. 3a, the pre-collapsed spherical part 12 of the device 10 is moved from the insertion cup 38 in which the part 12 is initially concealed through the open shut-off valve 36 and further into the pipe 30. Thereupon, as illustrated in Fig. 3b, the pre-collapsed, inflatable and expandable device 10 is inflated and pressurised providing an expansion of the pre-collapsed spherical part 12 into the expanded and spherical configuration as is illustrated in Fig. 3b.

The pre-collapsed, inflatable and expandable device 10 according to the present invention is preferably made from natural rubber constituting the preferred flexible and elastically deformable material. The device 10 made be made from natural rubber in a multi-step rubber coating process in which a core body is initially used as a generator for the deposition of the natural rubber in the intentional configuration on the outer surface of the core body or generator. Alternatively or additionally, reinforcing fibres or reinforcing webs may be used in conjunction with natural rubber for primarily reinforcing the expandable pre-collapsed spherical part 12. Alternatively, high flexible and high elastic polymer or elastomer materials may be used for the pre-collapsed, inflatable and expandable device 10 according to the present invention.

The device according to the present invention may apart from the closure valve application shown in Figs. 3a and 3b be used in numerous alternative applications in which a slim hose or blocking body is to be introduced into the interior of a circumferentially encircling outer body element through a minor aperture or opening of the outer body. An example of such alternative application of the device according to the present invention is shown in Fig. 4a and 4b in connection with a football as in Fig. 4a the unexpanded, pre-collapsed device 10 is introduced through a minor aperture at the top of a leather ball sphere, whereas in fig. 4b the device 10 is inflated, pressurised and expanded for providing an expansion of the rubber football into its intentional spherical configuration.

It is contemplated that the collapsing aspect of the invention relating to the provision of a slim inflatable body which may be introduced into a minor aperture may also be used for improving the production of spherical configurated flexible bodies or elements as the configuration of the spherical part 12 of the device 10 in the collapsed state produces the overall width or dimension of the device 10 as compared to a non-collapsed sphere. Therefore, in a plant for the production of expandable spheres, the pre-collapsing technique as deduced by the present invention may provide advantages as to the utilisation of the production plant since the number of products which may be produced within a specific area be limited by the outer boundaries of the coating bath in which the spherical products are produced may be increased by a factor of at least 4 provided the products be produced in a collapsed spherical state rather than in the un-collapsed spherical configuration. The pre-collapsing technique characteristic of the present invention is contemplated to be useful not only in connection with spherical bodies but also in connection with differently configurated bodies such as ellipsoid configurated bodies or generally rounded symmetrical, elongated or otherwise configurated spheres.

Although the present invention has been described above with reference to a presently preferred embodiment of the device according to the present invention, a person having ordinary skill within the art may based on the above teaching deduce differently configurated embodiments and alternatives and such differently configurated embodiments or alternatives which are readily perceivable or deducible by a person having ordinary skill within the art is therefore to be considered part of the present invention as defined in the appending patent claims.

## Claims

1. An inflatable, flexible device for use as an expandable device, comprising:
an inlet part of a substantially tubular configuration,
an expandable bag part integrally connected to said inlet part and made form a highly flexible and highly elastic material such as natural rubber, synthetic rubber, plastics, polymer or elastomer materials or combinations thereof, optionally reinforced by fibre or mesh included in the material, said expandable bag being changeable from an unexpanded state to an expanded state by inflating said bag through the introduction of an inflation gas into the interior through said inlet part, said expandable bag defining in said expandable state a specific, regular, geometric configuration such as a sphere, a rotational symmetrical body having a generator of a curved, convex or concave shape, said expandable bag including in its unexpanded state a plurality of inwardly bent folds extending parallel with said inlet part and extending from positions juxtaposed said inlet part along a major part of the outer surface of said expandable bag part, said inwardly bent folds reducing the overall diameter of said expandable device in said unexpanded state by at least 30%, preferably 40%, further preferably 50%, further preferably 60% or 70%, such as 30%-35%, 35%-40%, 40%-45%, 45%-50%, 50%-55%, 55%-60%, 60%-65%, 65%-70%, as compared to the geometrical configuration defined by said expandable bag in said non-expanded state and not including said plurality of inwardly bent folds.

2. The inflatable, flexible device according to claim 1, said plurality of inwardly bent folds comprising 4-24 folds such as 6-18 folds, preferably 12 folds, or 4-6, 6-8, 8-10, 10-12, 12-14, 14-16, 16-18, 18-20, 20-22, 22-24 folds.

3. The inflatable, flexible device according to any of the claims 1 and 2, said expandable bag part comprising an unfolded part opposite to its integral connection to said inlet part.

4. The inflatable, flexible device according to any of the claims 1-3, said plurality of folds continuing to the aphex of said expandable bag part opposite to its integral connection to said inlet part.

5. The inflatable, flexible device according to any of the claims 1-4, said tubular configuration of said inlet part defining a longitudinal extension, said extension being less than a characteristic dimension of said expandable bag in said expanded state being substantially identical to said characteristic dimension or being larger than said characteristic dimension.

6. The inflatable, flexible device according to any of the claims 1-5, said inlet part and said expandable bag part being made from identical materials and in a single production step.
